# EUROPEAN PATENT SPECIFICATION

(11) **EP 0 543 764 B1**
(45) Date of publication and mention of the grant of the patent: **21.05.1997**
(21) Application number: 92500127.3
(22) Date of filing: 08.10.1992
(51) Int. Cl.: D21H 27/00, D21H 17/30, D21H 17/31

(54) **Single or multi-layer recyclable material, with barrier properties against humidity and gases and a process for its manufacture**
Wiederverwendbares ein- oder mehrlagiges Material, mit Gasbarriereeigenschaften und Beständigkeit gegen Feuchtigkeit, sowie Verfahren zu seiner Herstellung
Matériau recyclable à une ou plusieurs couches, ayant des propriétés barrière contre l'humidité et les gaz, et procédé de fabrication

(30) Priority: 08.10.1991 CL 97191
(43) Date of publication of application: 26.05.1993
(73) Proprietor: Tetra Laval Holdings & Finance SA, 1009 Pully (CH)
(72) Inventor: Verdugo Lagos, Jorge, San Joaquin, Santiago (CL)
(74) Representative: Isern Jara, Jaime

(56) References cited:
- EP-A- 0 080 986
- EP-A- 0 404 582
- FR-A- 1 238 850
- US-A- 4 377 440
- J. P. CASEY: "Pulp and Paper", Chemistry and Chemical Technology, third edition, vol. III, 1981, John Wiley & Sons, New York, pages 1914-15

## Description

This invention relates to a single or multi-layers material and a process for its production. The material provides barriers against humidity, gases and light radiation, and in its composition there are substances that make it completely recyclable.

A prior art document, FR-A-1.238.850 by Duchange, discloses a process to manufacture papers and cardboards using an impregnating gel made up with methylcellulose and calcium, sodium, magnesium, potassium and alumina alginate salts,wherein improved properties both,mechanical and resilient,can thus be conferred to the papers and cardboards obtained.

Another prior art document, EP-A-0-404.582 by Merck & Co.,Inc.,refers to a mixture of a paper sizing varnish based on "Gellan gum" and one or more film forming polymers,which can be made up with a chemically modified starch, a cellulose derivative or a polyvinyl alcohol.Such a sizing varnish is useful for controlling paper porosity and ,also, serves as a binder for paper pigmented coatings.

The recycling properties of the material provided by present invention mean that, apart from the product formed with this material, once used, the constituents can be reused as prime material for the production of further material similar to that of the invention, for the manufacture of other products.

Among varied uses of the material of the invention, it can be noted the manufacture of paper or cardboard packages, either laminated, formed or injected from a cellulose pulp treated in accordance with the invention, to contain food, beverages or products other than food, such as liquid detergents, lubricating oils and greases, pastes or waxes for the shining of surfaces, paints and varnishes among others. Also sheets/layers according to the invention can be used in different industrial areas other than packaging such as in the manufacture of impermeable coatings to be used in the construction industry, e.g. covering for roofs etc.

The sheets and/or layers prepared in accordance with the invention also have the additional property of keeping the taste - and hygienic characteristics of food which may be packed in containers made from them, as long as they are kept in aseptic conditions usual for this type of operations.

A great variety of laminated materials more precisely multi-layer materials, are known in the art, that offer effective barriers against humidity, rays of light (radiation) and penetration of gases, all of which find their principal industrial use in the manufacture of disposable packages to contain food, biological substances etc., especially when these substances are in liquid form.

In the mentioned uses, it is necessary that the material that will form the package, has certain basic properties such as adequate mechanical resistance so that the package can stand the manipulations in the different stages of manufacture, filing, distribution and use while containing the product. It is also necessary that the laminated material of the package be impermeable to humidity and gases and, additionally, it might be necessary that the package offers a barrier against light radiation.

Impermeability is essential when the substance to be packed is a liquid, thereby preventing leakage, or when the substance can be damaged by humidity that tends to penetrate through the package, for instance, if filling in vacuum has taken place, or at a pressure considerably lower than the environmental with the purpose of displacing the air from its content.

The impermeability of a package can be indispensable, e.g. to avoid oxidation of its contents, leakage or contamination of odours, to prevent the degradation of vitamins or proteins of the content, etc.

The degrading action of light is well known, e.g. ultra violet radiation, in some types of organic molecules, so a package that stores organic substances should offer an appropriate barrier against this type of radiation.

A great diversity of improved known multi-layer materials, has shown advantages in some of the above mentioned factors, compared with previous known multi-layer materials in the technical field.

Generally, multi-layer materials with barriers against humidity, gases and light radiation, consist of a supporting sheet and/or layer, or a structural sheet of cellulose, on which metallic sheets and/ or layers like aluminium, zinc or tin, polyethylene sheets, layers or polyethyleneglycol polyesters etc., are placed on top. But due to the nature of the laminated components and their integration to the material compounds, the multi-layer materials are difficult to be recycled and are not degradable.

Degradation of those industrial products that are no longer utilized, is more and more necessary as much for the preservation of the environment, as well as recovering the basic materials or substances that form the ground. When it is not possible to combine degradation of industrial materials with their use, it is necessary to find their recyclability, i.e that the materials that constitute a product can reenter the production cycle of the same product, or other industrial product, thereby avoiding to use materials recently extracted from the natural environment, materials that can become scarce or expensive to extract.

For the recyclability of the products to be practical, this has to be achieved in few and economical stages of post treatment. The invention offers precisely these characteristics of recyclability of materials which have been provided with several layers to give it appropriate barriers against humidity, gases and light radiation.

In general terms, the invention consists of a sheet and/ or a layer, based on structural support of cellulose made from cellulose pulp, such as cardboard or paperboard, impregnated or covered with a gel forming hydrocoloid sol selected from Agar-Agar, which provides same with barrier properties against humidity and gases. (sol = coloid dispersed in a liquid). Additionally the cellulose support can be impregnated or covered with a barrier against light, such as an ink based on oxides, or titan or barium salts.

The substance used as a barrier against light must be electrically neutral and must not be of the migratory type. The electric neutrality of the light barrier is fundamental to reassure the recyclability of the material that forms the sheet since, otherwise, the gel forming hydrocoloid can alter its gelification properties. On the other hand, if the barrier against light is an ink of the migratory type, this can become concentrated in one of the joining sides between two sheets or layers thus altering its adhesiveness.

Use of Agar-Agar as a gel forming hydrocoloid as a barrier against humidity and gases, supported by a base of cellulose, give the material very particular characteristics. In fact, Agar-Agar possesses a thermic hysteresis of appropriate rank for the majority of applications of sheets or layers so manufactured, because Agar-Agar melts at 100°C and gelifies at 34°C so that the gel integrated in the cellulose support, and duly dehydrated, will keep its barrier properties against humidity and gases until the material is subjected to the fusion temperature of the hydrocoloid, when the gel will start to dehydrate to be converted into a sol. This is what allows the sheet and/or layers of the invention to be used in different applications with ample temperature variations, as long as they do not reach the fusion temperature of the hydrocoloid and, on the contrary, the material of the sheet and/or layers can be recycled at the mentioned fusion temperature to form a pulp of cellulose containing the hydrocoloid and inks with barriers against light.

For a detailed explanation of the invention, two principal variants will be described. One embodiment, is applicable when a support sheet and/or layer of the invention is made from cellulose pulp, and a second embodiment is applicable when it includes a support consisting of a sheet or layer of cardboard or paperboard, previously formed by traditional methods.

In the first embodiment, the sheet and/or layer of the invention is formed from a cellulose pulp, which can consist of a cellulose pulp of prime use, or a mixture of the same with a recycled cellulose pulp, the latter obtained from paper, carton, 'rag waste or other sources, that supply cellulose or recyclable fibres, among which can be found waste from laminated materials of the present invention.

The gel forming hydrocoloid sol selected from Agar-Agar is prepared in a weight equivalent proportion as a minimum at a 0.5% in respect to the total water content in the pulp, supposing that the gel forming hydrocoloid possesses a gel strength of 600 g/cm². This proportion will be inverse to the gel strength of the gel forming hydrocoloid used, in comparison with the reference of 0.5% to a gel strength of 600 g/cm².

Considering a given strength of gel, the proportion in weight of the gel forming hydrocoloid, with regard to the total water content in the cellulose mass, must take into consideration the possible previous content of gel forming hydrocoloids that the initial pulp may have, as a consequence of the use of recycled materials in it.

When adding the mixture of hydrocoloid to the cellulose pulp, the latter must have the same or higher temperature than the gelification point to avoid gelification of the gel forming hydrocoloid. To avoid this in this stage of incorporation of the sol to the cellulose, it is desirable to do it immediately before or when the pulp enters the wire of the manufacture of paper.

Once the gel forming hydrocoloid is incorporated in the cellulose pulp, the hydrocoloid will disperse on all of the pulp and then this is treated in a conventional way to form sheets and/or layers of cardboard or paper, until a substantially dry sheet or layer is obtained with the gel forming hydrocoloid integrated in it having the final stage of dehydrated gel, a minimum proportion of 1 : 1000 in weight of hydrocoloid, being obtained in respect to the cellulose content.

The adding of a barrier against light can be done in the first stages of manufacture, i.e. before or after adding the gel forming hydrocoloid to the cellulose pulp, or rather after having formed the paper or carton sheet/layer, in which case the barrier against light is applied on one of the sides of the sheet/layer, as a cover.

In a second embodiment of the process of the invention, a ready made cardboard or paperboard is applied on a structural support in the form of paper sheet/cover, by conventional methods. In this case the sheet/layer of paper or cardboard is impregnated with the gel forming hydrocoloid sol prepared with at least a 0.1% in weight with regard to the total water content of the mixture. This proportion will be inverse to the gel strength of the used Agar-Agar hydrocoloid, in comparison with the reference of 0.5% to a gel strength of 600 g/cm² in the first embodiment.

The sheet/layer being impregnated with the gel forming hydrocoloid sol is maintained at a temperature superior to that of the gelification point of said sol, until the hydrocoloid is completely dispersed on the sheet/layer.

In a next stage, the sheet/layer of paper, cardboard or paperboard already impregnated with the gel forming hydrocoloid is dehydrated and cooled down to the environmental temperature, obtaining a dehydrated gel absorbed in the cellulose pulp which forms the base layer/sheet, the final humidity so obtained being the usual of paper and cardboards.

As in the first embodiment, in the second one a final dry product is obtained with the hydrocoloid integrated in the resulting sheet/layer so that the dehydrated gel is found present in a minimum proportion of 1 : 1000 in weight, with regard to the cellulose content.

If the industrial application of the laminated material requires it, the sheet/layer already impregnated with gel and already dried, will be subject to a process of covering it with a barrier against light, by conventional methods such as printing or other equivalent methods.

Whether the first or the second embodiment, has been used to form the laminated material of the invention, the barrier against light will consist of, preferably, an ink or covering based on oxides or barium or titan salts, which are hydrosoluble, electrically neutral and are not migratory.

When it is convenient to form a multi-laminated material, e.g. of the corrugated carton type, sheets/layers of the invention will be used, preferably prepared in accordance with the process described in the first or second embodiments of manufacture and joining of the sheets can be done either by traditional techniques, on condition that the used adhesive does not interfere with the recyclable characteristics of the material. Otherwise the joining of the sheets/layers can be made using the self-adhesive properties of the Agar-Agar hydrocoloid. In this last case, the joining of the sheets/layers contemplates the stages of heating the sheets and/or layers, and if necessary moistening them, previously treated with the gel forming hydrocoloid. This moistening is done at a temperature the same as or superior to the temperature of the fusion of the gel forming hydrocoloid, with the purpose of restoring the state of sol in each interstitious in the cellulose pulp furnishing the sheets to be joined together.

After the hydrocoloid is brought to its sol state, the sheets'/layers' sides that are free from barriers against light, are put face to face and pressure is applied so that the sol of both surfaces of two adjacent sheets/layers is joined. While the sheets/layers are joined by pressure, they are cooled down to change the sol back to gel, after which they are dehydrated to a level usual for papers and cardboards.

The gel-forming hydrocolloid selected from Agar-Agar is inert to the substances that can or should be in contact with the laminated material.

A second condition that the hydrocoloid should fullfil, is the thermal hysteresis which should be found within temperature ranges compatible with the industrial application of the laminated material. For certain applications these ranges must be as ample as possible and must include the environmental. temperatures most frequent, so that the gel forming hydrocoloid maintains its state of gel and its fusion point, i.e., the point when the gel is transformed into a sol, should preferably be substantially higher than the most extreme environmental temperatures to a specific industrial application. A typical case of industrial application that requires a thermal hysteresis of ample range in the above mentioned sense is the one for packages for food.

A third condition to watch our for, is the gel strength of the gel forming hydrocoloid used in the laminating material of the invention, which will contribute to the total resistance of the sheet/layer as far as traction and cutting are concerned.

The hydrocoloid used in the invention, and particularly convenient to use in the sheet/layer obtained in the manufacture of packages, is Agar-Agar.

Another synergic effect that can be used in the context of the invention consists in the improvement of the gel strength obtained when mixing the gel forming hydrocoloid and certain ionic concentrations of Li for improving the barrier against gases, or Ca, Mg, Na or K for improving the gel strength.

Certain generalisations or variations of the product as well as to the proposed process are obvious and should be considered included in the claimed protections. Said variations will result even more obvious if these do not tend to improve the basic characteristics already defined, such as the condition of barrier against humidity and gases, compatible with a recyclable product and which offers a support of good mechanic characteristics, as is the cellulose. In this manner, the use of woven fabrics as a support of the gel forming hydrocoloid, the use of supports that include a cellular or alveolar structure, the adding of another type of coatings or barriers different to the contamplated in the preceeding statements, such as recyclable radioopaque coatings, cellulose in any of its industrial forms such as the extruded cellulose, etc., will depend on the particular industrial applications of each case, and therefore they will be included in this invention.

## Claims

1. A single or multi-layer recyclable material, with barrier properties against humidity, gases and, possibly, against light, applicable in the manufacture of containers of paper or cardboard, coating materials for constructions, among other uses, CHARACTERIZED in that said recyclable material is constituted of at least one base sheet or layer made from cellulose pulp and, at least, one gel-forming hydrocolloid selected from Agar-Agar,the weight proportion of the hydrocolloid being at least 0,5% in respect to the total water content in the pulp,the gel forming hydrocolloid possessing a gel strength of 600 g/cm², or alternatively, said material is constituted, at least,of a nearly ready-made, but not ready-dried paper coated with a solution of said hydrocolloid, said hydrocolloid being in the form of dehydrated gel in the resulting laminated sheet or layer; the minimum ratio of the gel forming hydrocolloid to the cellulose content being about 1 : 1000, by weight; different single-layers of recyclable material being joined each other, in a conventional way or by common interphase contact formed by said gel forming hydrocolloid, to form a multi-layer recyclable material.

2. A single or multi-layer recyclable material,according to claim 1, CHARACTERIZED in that at least one of the constituting sheets or layers of said recyclable material is provided with a barrier against light substance, either integrated as an ink in the cellulose pulp, or incorporated to one of the faces of the layer, as a coating; the substance used as a barrier against light being electrically neutral and hydrosoluble.

3. A process to manufacture a single layer recyclable material according to claim 1, CHARACTERIZED by comprising a first step for integrating a sol of at least one gel forming hydrocolloid selected from Agar-Agar,into a cellulose pulp substrate being at a temperature above the gelation point of said sol, said gel-forming hydrocolloid being at a ratio of at least 0,5%, by weight, to the total water content in said cellulose pulp, said hydrocolloid possessing a gel strength of 600 g/cm²; a second step for forming a sheet of paper or cardboard in a conventional way; and a third step for dehydrating and post cooling said resulting sheet, at environmental temperature, until reaching a desired humidity level on dry basis, typical of paper.

4. A process to manufacture a single layer recyclable material, according to claim 3, CHARACTERIZED in that an electrically neutral and hydrosoluble substance having barrier properties against light is integrated into the cellulose pulp, either before or after adding said hydrocolloid.

5. A process to manufacture a single layer recyclable material, according to claim 4, CHARACTERIZED in that a coating of said barrier against light substance is incorporated to the already formed layer.

6. A process to manufacture a single layer recyclable material, according to claim 1, CHARACTERIZED by comprising a first step wherein a sol of at least one gel forming hydrocolloid selected from Agar-Agar, is added to a paper or cardboard sheet, the ratio of said hydrocolloid to the total water content being at least 0,5%, by weight, such amount of hydrocolloid being applicable when said hydrocolloid possesses a gel strength of 600 g/cm²; a second step wherein said sheet is maintained at a temperature superior to the gelation point of said sol until the sol, or the hydrocolloid, is completely dispersed on said sheet; and a third step wherein said treated sheet is subjected to dehydration and post-cooling at environmental temperature to obtain a cellulosic sheet having said gel absorbed therein and a conventional final humidity.

7. A process to manufacture a single layer recyclable material, according to claim 6, CHARACTERIZED in that the sheet or layer of paperboard or cardboard is coated on one of its faces with an electrically neutral and hydrosoluble substance as a barrier against light.

8. A process to manufacture a single layer recyclable material, according to any of claims 4,5 and 7, CHARACTERIZED in that said barrier against light is an ink or a coating based on titanium or barium.

9. A process to manufacture a multi-layer recyclable material, according to any of claims 1 and 2, CHARACTERIZED in that sheets or layers of paperboard or cardboard, already impregnated with Agar-Agar according to any of claims 3 and 5 to 8, are joined to each other by wetting them at the same or superior fusion temperature of said gel forming hydrocolloid, to drive same into a sol stage; thereafter, faces free from said barrier against light, or two or more of said sheets are contacted each other, and pressed together, through conventional methods, whilst cooled down to transform said sol into a gel, and later on are dehydrated.

10. A process to manufacture a single or a multi-layer recyclable material, according to any of claims 3 to 9, CHARACTERIZED in that said gel forming hydrocolloid selected from Agar-Agar and ionic lithium derivatives, are mixed for enhancing the barrier against gases.

## Patentansprüche

1. Wiederverwertbares ein- oder mehrschichtiges Material mit Sperreigenschaften gegen Feuchtigkeit, Gase und, möglicherweise, Licht, zur Verwendung in der Herstellung von Behältern aus Papier oder Pappe, Verkleidematerialien für den Bau, neben anderen Anwendungen, dadurch gekennzeichnet, dass das wiederverwertbare Material aus mindestens einer Bahn oder Schicht aus Zellulosebrei und mindestens einem gelbildenden Hydrokolloid, welches aus Agar-Agar ausgewählt worden ist, besteht, wobei der Gewichtsanteil des Hydrokolloids mindestens 0,5% bezüglich des Gesamtwassergehaltes des Breies ist, das gelbildende Hydrokolloid eine Gelfestigkeit von 600 g/cm² hat, oder alternativ das Material aus mindestens einem für den Gebrauch fast fertigen, jedoch nicht vollständig trockenen Papier besteht, welches mit einer Lösung des Hydrokolloids beschichtet ist, wobei das Hydrokollid in Form von dehydratisiertem Gel in der resultierenden geschichteten Lage oder Schicht vorliegt; das Minimumverhältnis des gelbildenden Hydrokolloids zum Zellulosegehalt etwa 1 : 1000 gewichtsbezogen ist; wobei verschiedene Einzellagen des wiederverwertbaren Materials in herkömmlicherweise oder durch einen üblichen Zwischenphasenkontakt, welcher durch das gelbildende Hydrokolloid gebildet wird, miteinander verbunden sind, um ein mehrschichtiges wiederverwendbares Material zu bilden.

2. Wiederverwertbares ein- oder mehrschichtiges Material nach Anspruch 1, dadurch gekennzeichnet, dass mindestens eine der das wiederverwertbare Material bildenden Lagen oder Schichten mit einer Sperrsubstanz gegen Licht versehen ist, entweder als in den Zellulosebrei integrierte Tinte oder als eine in eine der Seiten der Schicht eingearbeitete Beschichtung; wobei die als Sperre gegen Licht benützte Substanz elektrisch neutral und wasserlöslich ist.

3. Verfahren zur Herstellung eines ein- oder mehrschichtigen, wiederverwertbaren Materials nach Anspruch 1, gekennzeichnet durch einen ersten Verfahrensschritt zum integrieren einer Lösung von mindestens einem gelbildenden Hydrokolloid, welches aus Agar-Agar ausgewählt worden ist, in ein Zellulosebreisubstrat, welches eine Temperatur über dem Festwerdepunkt der Lösung hat, wobei das gelbildende Hydrokolloid in einem Verhältnis von mindestens 0,5 Gewichtsprozenten des gesamten Wassergehalts in dem Zellulosebrei vorliegt, das Hydrokolloid eine Gelfestigkeit von 600g/cm² hat, einen zweiten Schritt zum Bilden einer Papier- oder Pappebahn in herkömmlicher Weise; und einen dritten Verfahrensschritt zum Dehydratisieren und Nachkühlen der Endbahn auf Umgebungstemperatur bis ein gewünschtes Feuchteniveau auf Trockenbasis, typisch für Papier, erreicht ist.

4. Verfahren zur Herstellung eines einschichtigen, wiederverwendbaren Materials nach Anspruch 3, dadurch gekennzeichnet, dass eine elektrisch neutrale, wasserlösliche Substanz mit Sperreigenschaften gegen Licht in den Zellulosebrei integriert wird, entweder vor oder nach dem Hinzufügen des Hydrokolloids.

5. Verfahren zur Herstellung eines einschichtigen, wiederverwertbaren Materials nach Anspruch 4, dadurch gekennzeichnet, dass eine Beschichtung der Sperrsubstanz gegen Licht in die schon geformte Schicht eingearbeitet wird.

6. Verfahren zur Herstellung eines einschichtigen, wiederverwertbaren Materials nach Anspruch 1, gekennzeichnet durch einen ersten Verfahrensschritt, bei welchem eine Lösung von mindestens einem ein gelbildendes Hydrokolloid, ausgewählt aus Agar-Agar, einer Papier- oder Pappebahn hinzugefügt wird, wobei das Verhältnis des Hydrokolloids zum Gesamtwassergehalt mindestens 0,5 Gewichtsprozent beträgt, wobei eine solche Menge Hydrokolloid anwendbar ist, wenn das Hydrokolloid eine Gelfestigkeit von 600 g/ cm² aufweist; einen zweiten Verfahrensschritt, bei welchem die Bahn auf einer oberhalb des Festwerdepunktes der Lösung gehalten wird, bis die Lösung oder das Hydrokolloid vollständig auf der Bahn verteilt ist; und einen dritten Verfahrensschritt, bei welchem die behandelte Bahn einer Dehydratation und Nachkühlung auf Umgebungstemperatur ausgesetzt wird, um eine Zellulosebahn mit dem darin absorbierten Gel und einer herkömmlichen Endfeuchtigkeit erhalten wird.

7. Verfahren zur Herstellung eines einschichtigen, wiederverwertbaren Materials nach Anspruch 6, dadurch gekennzeichnet, dass die Bahn oder Schicht aus Papier oder Pappe auf einer ihrer Seiten mit einer elektrisch neutralen, wasserlöslichen Substanz als Sperre gegen Licht beschichtet wird.

8. Verfahren zur Herstellung eines einschichtigen, wiederverwertbaren Materials nach einem der Ansprüche 4, 5 und 7, dadurch gekennzeichnet, dass die Sperre gegen Licht eine auf Titan oder Barium basierende Tinte oder Beschichtung ist.

9. Verfahren zur Herstellung eines mehrschichtigen, wiederverwertbaren Materials nach einem der Ansprüche 1 und 2, dadurch gekennzeichnet dass die Bahnen oder Lagen aus Papier oder Pappe, welche bereits mit Agar-Agar gemäss einem Ansprüche 3 und 5 bis 8 imprägniert sind, durch deren Befeuchten bei der gleichen oder höheren Fusionstemperatur des gelbildenden Hydrokolloids zusammengefügt werden, um sie in ein Lösungsstadium zu überführen; danach die von der Sperre gegen Licht freien oder zwei oder mehr der Bahnen mit einander in Berührung gebracht und zusamnengepresst werden, unter Verwendung herkömmlicher Verfahren, während sie abgekühlt werden, um die Lösung in ein Gel zu überführen und später deshydratiert werden.

10. Verfahren zur Herstellung eines ein- oder mehrschichtigen, wiederverwertbaren Materials nach einem der Ansprüche 3 bis 9, dadurch gekennzeichnet dass das aus Agar-Agar ausgewählte, gelbildende Hydrokolloid und ionische Lithiumderivate zur Verbesserung der Sperreigenschaften gegen Gas gemischt werden.

## Revendications

1. Matériau recyclable à couche unique ou multiple, ayant des propriétés d'isolation contre l'humidité, les gaz et, peut-être, contre la lumière, pouvant être utilisé dans la fabrication de récipients en papier ou carton, de matériaux de revêtement pour constructions, parmi d'autres usages, caractérisé en ce que le dit matériau recyclable est constitué d'au moins une feuille ou couche de base faite à partir d'une pâte de cellulose et, au moins, un hydrocolloid formateur du gel choisi de Agar-Agar, la proportion en poids de l'hydrocolloide état d'au moins 0,5% par rapport à la teneur totale en eau dans la pâte, l'hydrocolloide formateur du gel possédant une résistance de gel de 600 g/cm2 ou alternativement, le dit matériau est constitué d'au moins un papier presque prêt à l'emploi, mais non fini de secher, revêtu d'une solution du dit hydrocolloide, le dit hydrocolloide étant sous forme de gel déshydraté de la feuille ou couche laminée résultante; le rapport minimum de l'hydrocolloide formateur de gel au contenu de cellulose étant de 1 à 1000 en poids; différentes couches simples du matériau recyclable étant jointes l'une à l'autre, d'une manière conventionnelle ou par un contact interphase formé par le dit hydrocolloide formateur de gel pour former un matériau recyclable multicouche.

2. Matériau recyclabe à couche unique ou multiple, selon la revendication 1, caractérisé en ce qu'au moins une des feuilles ou couches formant le dit matériau recyclable est pourvu d'une substance formant barrière contre la lumière, ou bien intégrée comme une encre dans la pâte de cellulose ou incorporée dans une des faces de la couche comme revêtement; la substance utilisée comme barrière contre la lumière étant électriquement neutre et hydrosoluble.

3. Procédé de fabrication d'un matériau recyclable à couche unique selon la revendication 1, caractérisé en qu'il comprant une première étape pour intégrer une solution d'au moins un hydrocolloide formateur du gel choisi de Agar-Agar dans un substrat de pâte de cellulose se trouvant à une température supérieure au point de gelification de la dite solution, la dit hydrocolloide formateur de gel étant à un rapport d'au moins 0,5% en poids par rapport à la teneur totale d'eau dans la dite pâte de cellulose, la dit hydrocolloide possédant une résistance de gel de 600 g/cm²; une seconde étape pour former une feuille de papier ou de carton d'une manière conventionnelle; et une troisième étape pour déshydrater et ensuite refroidir la dite feuille resultante à la temperature ambiante, jusqu'à atteindre un niveau d'humidité désiré sur base sec typique pour le papier.

4. Procédé de fabrication d'un matériau recyclable à couche unique selon la revendication 3, caractérisé en ce qu'une substance électriquement neutre et hydrosoluble ayant des propriétés d'isolation contre la lumière est intégrée dans la pâte de cellulose, ou bien avant ou après l'addition du dit hydrocolloide.

5. Procédé de fabrication d'un matériau recyclable à couche unique selon la revendication 4, caractérisé en ce qu'un revêtement de la dite substance formant barrière contre la lumière est incorporée à la couche déjà formée.

6. Procédé de fabrication d'un matériau recyclable à couche unique selon la revendication 1, caractérisé en ce au'il comprant une première étape dans la quelle une solution d'au moins un hydrocolloide formateur de gel choisi de Agar-Agar est ajoutée à une feuille de papier ou de carton, le rapport du dit hydrocolloide à la teneur totale en eau étant d'au moins 0,5% en poids, une telle quantité d'hydrocolloide étant applicable, quand le dit hydrocolloide possède une résistance de gel de 600 g/cm², une seconde étape dans la quelle la dite feuille est maintenue à une température superieure au point de gelification de la dite solution jusqu'à ce que la solution, ou l'hydroCOlloide, est complétement dispersée sur la dite feuille; et une troisième étape dans la quelle la feuille traitée est soumise à la déshydratation et au poste refroidissement à température ambiante pour obtenir une feuille cellulosique ayant absorbée de dit gel et une d'hymidité finale conventionnel.

7. Procédé de fabrication d'un matériau recyclable à couche unique selon la revendication 6, caractérisé en ce que la dite feuille ou couche de papier ou carton est revêtue sur une de ses faces d'une substance électriquement neutre et hydrosoluble comme barrière contre la lumière.

8. Procédé de fabrication d'un matériau recyclable à couche unique selon une de revendications 4, 5 et 6, caractérisé en ce la dite barrière contre la lumière est une encre ou un revêtement basé sur le titane ou le barium.

9. Procédé de fabrication d'un matériau recyclable multicouche, selon une des revendications 1 ou 2, caractérisé en ce que des feuilles ou couches de papier ou carton, déjà imprégnées avec Agar-Agar selon une des revendications 3 et 5 à 8 sont jointes l'une à l'autre en les humidifiant à une température égale ou supérieure à la température de fusion du dit hydrocolloide formateur de gel, pour les amener à l'état de solution; après quoi les faces libres de la dite barrière contre la lumière ou deux ou plusieures des dites feuilles sont contactées l'une à l'autre et comprimées, par des méthodes conventionnelles, tandis qu'elles sont refroidies pour transformer la dite solution en un gel et déshydratés par après.

10. Procédé de fabrication d'un matériau recyclable à couche unique ou multiple selon une des revendications 3 à 9, caractérisé en ce le dit hydrocolloide formateur de gel est Choisi de Agar-Agar et des dérivés ioniques de lithium sont mélangés pour améliorer la barrière contre les gaz.
